# EUROPÄISCHE PATENTANMELDUNG

(11) **EP 3 361 432 A1**
(43) Veröffentlichungstag der Anmeldung: **15.08.2018**
(21) Anmeldenummer: 18000102.6
(22) Anmeldetag: 05.02.2018
(51) Int. Cl.: G06Q 20/00

(54) **AUTORISIERUNGSVORRICHTUNG**

(30) Priorität: 08.02.2017 DE 102017001170
(71) Anmelder: Giesecke+Devrient Mobile Security GmbH, 81677 München (DE)
(72) Erfinder: Tarantino, Thomas, 83410 Laufen (DE); Behlendorf, Sascha, 85560 Ebersberg (DE)

(57) **Zusammenfassung**

Die vorliegende Erfindung ist gerichtet auf eine Autorisierungsvorrichtung, welche beispielsweise als ein Pflaster ausgestaltet werden kann und mittels einer Sollbruchstelle lediglich für einen einmaligen Gebrauch eingerichtet ist. Somit kann ein Bezahlvorgang bzw. ein Zutritt zu einem gesicherten Bereich mittels dieser Einwegvorrichtung durchgeführt werden. Die vorliegende Erfindung ist ferner gerichtet auf ein entsprechendes Verfahren zur Herstellung der vorgeschlagenen Autorisierungsvorrichtung sowie auf eine Autorisierungsanordnung, welche die Autorisierungsvorrichtung verwendet. Ferner wird ein Computerprogrammprodukt vorgeschlagen, mit Steuerbefehlen, welche das vorgeschlagene Verfahren implementieren.

## Beschreibung

Die vorliegende Erfindung ist gerichtet auf eine Autorisierungsvorrichtung, welche beispielsweise als ein Pflaster ausgestaltet werden kann und mittels einer Sollbruchstelle lediglich für einen einmaligen Gebrauch eingerichtet ist. Somit kann ein Bezahlvorgang bzw. ein Zutritt zu einem gesicherten Bereich mittels dieser Einwegvorrichtung durchgeführt werden. Die vorliegende Erfindung ist ferner gerichtet auf ein entsprechendes Verfahren zur Herstellung der vorgeschlagenen Autorisierungsvorrichtung sowie auf eine Autorisierungsanordnung, welche die Autorisierungsvorrichtung verwendet. Ferner wird ein Computerprogrammprodukt vorgeschlagen, mit Steuerbefehlen, welche das vorgeschlagene Verfahren implementieren.

DE 10 2012 109 359 A1 zeigt eine Chipanordnung aufweisend eine Boosterantenne, welche beispielsweise auf einem flexiblen Träger angeordnet werden kann, beispielsweise einem Textilträger bzw. einem Pflaster.

DE 60 2005 004 411 T2 zeigt eine Kommunikationseinheit, welche auf der Haut einer Person angebracht werden kann und hierbei Körperdaten eines Trägers ausliest.

DE 20 20161-06150 U1 zeigt ein Fieberpflaster zum Aufkleben auf die Hautoberfläche eines Patienten, um hierbei Körperfunktionen bzw. eine Temperatur oder einen Puls zu messen.

DE 19 749 767 A1 zeigt ein aufzuklebendes Pflaster, welches im Brustbereich eines Patienten aufgeklebt wird und Elektrokardiogrammsignale erfasst und speichert.

Gemäß herkömmlicher Verfahren ist eine Vielzahl von Autorisierungsmitteln bekannt, beispielsweise Chipkarten oder Transponder, welche es einem Träger ermöglicht, Zugang zu einem gesicherten Bereich zu erhalten oder eine Zahlung zu autorisieren. Beispielsweise ist es bekannt, in einem Schwünmband ein Zugangsarmband zu verteilen, mit dem auch Getränke bezahlt werden können. Hierbei ist es jedoch nachteilig, dass entsprechende Bänder besonders technisch aufwändig sind, da diese wiederverwendet werden sollen und insbesondere, dass bei einem Verlust für den Kunden ein erhebliches Risiko entsteht. So ist es gemäß diesen bekannten Bändern möglich, dass ein weiterer Kunde das verlorengegangene Band auffindet und unberechtigterweise einen Konsum unter falscher Identität bezahlt. Auch empfinden viele Kunden dieses Format als störend und wünschen sich ein Format, welche sie weder irritiert, noch einen Diebstahl bzw. einen Verlust begünstigt.

Aus einer anderen Anwendungsdomäne sind sogenannte medizinische Pflaster bekannt, welche eine Messsensorik aufweisen, die Patientendaten abgreift, und diese weiterreicht bzw. abspeichert. Hierbei entsteht jedoch der Nachteil, dass diese bekannten Medizinpflaster Daten über einen längeren Zeitraum abgreifen müssen und somit aufwändig ausgestaltet werden müssen. Beispielsweise ist es hierbei nicht möglich, lediglich eine temporäre Stromversorgung vorzusehen, sondern, falls über einen längeren Zeitraum gemessen werden muss, ist eben auch eine permanente Stromversorgung möglich. Somit wird hierbei der Fachmann davon abgehalten, eine Induktionsspule vorzusehen, wie sie beispielsweise aus sogenannten Smartcards bekannt ist. Aufgrund der aufwändigen Ausgestaltung ist hierbei typischerweise vorgesehen, dass zumindest Teile des Medizinpflasters Wiederverwendung finden und nicht als Einwegartikel ausgestaltet werden. So ist es bekannt, elektronische Bauelemente mittels eines Klebestreifens an einem Patienten zu befestigen, um nach einem Ablösen des Klebestreifens die elektronischen Komponenten bei einem weiteren Patienten wiederzuverwenden.

Es ist somit eine Aufgabe der vorliegenden Erfindung, ein Autorisierungsmittel bereitzustellen, welches es ermöglicht, eine Zahlung bzw. ein Zugangsrecht zu autorisieren, ohne dass hierbei der Benutzer eine störende physische Einheit mit sich tragen muss. Das Autorisierungsmittel soll derart ausgestaltet werden, dass es diebstahlsicher ausgegeben werden kann und nicht verlorengehen kann. Hierbei soll gewährleistet werden, dass, falls es wider Erwarten doch verlorengeht, ein Dritter, Unbefugter keinerlei Funktionalität nutzen kann. Es ist ferner eine Aufgabe der vorliegenden Erfindung, ein Verfahren zur Herstellung eines solchen Autorisierungsmittels vorzuschlagen sowie eine Systemanordnung, welches dieses Autorisierungsmittel verwendet. Ferner besteht die Aufgabe darin, ein Computerprogramm bereitzustellen, welches Steuerbefehle aufweist, welche das vorgeschlagene Verfahren implementieren.

Die Aufgabe wird gelöst durch eine Autorisierungsvorrichtung zur kontaktlosen Bezahlung und zur Zugangskontrolle gemäß Patentanspruch 1. Weitere vorteilhafte Ausgestaltungen sind in den Unteransprüchen angegeben.

Demgemäß wird eine Autorisierungsvorrichtung zur kontaktlosen Bezahlung und zur Zugangskontrolle vorgeschlagen, aufweisend eine Recheneinheit eingerichtet zur Autorisierung von empfangenen Steuersignalen, eine Kommunikationseinheit eingerichtet zum Empfang und zum Aussenden von Steuersignalen, eine Klebeschicht zur Anbringung der Recheneinheit und der Kommunikationseinheit an menschlicher Haut, wobei die Autorisierungsvorrichtung derart ausgestaltet ist, dass sie nach einem Anbringen von menschlicher Haut nicht zerstörungsfrei ablösbar ist.

Die vorgeschlagene Autorisierungsvorrichtung ist vorzugsweise tragbar und mittels der elektronischen Komponenten derart ausgestaltet, dass mittels der Klebeschicht direkt auf eine menschliche Haut aufgebracht werden kann, wobei sie aufgrund besonders leichtgewichtiger Einheit nicht weiter auffällt. So ist es möglich, die einzelnen Einheiten derart auszugestalten, dass diese lediglich wenige Gramm Gewicht aufweisen und zudem besonders flach ausgestaltet werden können. Vorzugsweise ist es hierbei zu vermeiden, eine permanente Stromquelle vorzusehen, sondern vielmehr können passive Komponenten wie eine Induktionsspule verbaut werden, die dann lediglich bei Bedarf Strom abgeben. Somit handelt es sich also um eine tragbare Autorisierungsvorrichtung, welche an menschlicher Haut oder an Kleidung angebracht werden kann und hierbei eine Bezahlung bzw. eine Zugangskontrolle ermöglicht.

Bei einem kontaktlosen Bezahlen kann es sich um einen Bezahlvorgang handeln, wie er im Allgemeinen bereits von sogenannten Smartcards bekannt ist, die mittels eines kontaktlosen Lesegeräts ausgelesen werden. Ferner ist es auch möglich, ein entsprechendes Lesegerät bereitzustellen, welches eine Zugangskontrolle implementiert. So kann die Autorisierungsvorrichtung von einem Lesegerät angesprochen werden und hierbei entweder eine Bezahlung oder einen Identitätsnachweis fordern. Dies ist derart möglich, dass die Autorisierungsvorrichtung beispielsweise mittels der Recheneinheit individualisiert wird und eine Identität eines Benutzers bzw. eine Bezahlinformation bereitstellt.
Somit besteht die Möglichkeit, die vorgeschlagene Autorisierungsvorrichtung beispielsweise bei einem Benutzer an einem Handgelenk oder einem Unterarm anzubringen und somit Zugang zu einem gesicherten Bereich zu bekommen, der mittels eines entsprechenden Lesegeräts Eingang gewährt oder nicht. So kann eine Schranke ein Lesegerät bereitstellen, welches eine bereitgestellte Zugangsinformation ausliest und somit die Schranke öffnen ober aber auch den Zugang verweigern kann. Möchte nunmehr der Träger der Autorisierungsvorrichtung einen Bezahlvorgang starten, so kann er sein Handgelenk mitsamt der Autorisierungsvorrichtung an ein Lesegerät führen und somit ähnlich wie bei einer Kreditkarte einen kontaktlosen Bezahlvorgang auslösen. Hierbei erkennt der Fachmann weitere Anwendungsszenarien und erkennt, dass die Autorisierungsvorrichtung beispielsweise auch an einem Fuß angebracht werden kann, derart, dass die Autorisierungsvorrichtung für den Träger nicht störend ist und das Lesegerät im Bodenbereich angebracht wird. Somit verschwindet also die Autorisierungsvorrichtung aus dem Blickfeld des Trägers und er kann sich auf einfache Art und Weise Zugang zu einem gesicherten Bereich verschaffen. Hierbei ist es sogar möglich, dass über der Autorisierungsvorrichtung Kleidung getragen wird, durch die eine Bezahlinformation oder eine Zugangsinformatiori ausgelesen werden kann.

Hierzu wird eine Recheneinheit vorgesehen, welche Steuersignale auswertet, die eine Autorisierung verlangen. So kann die Autorisierungsvorrichtung über weitere elektronische bzw. elektrische Komponenten verfügen, die eine Information abspeichern. Die Recheneinheit greift dann auf den Speicher der Autorisierungsvorrichtung zurück und liest beispielsweise eine Identität des Trägers aus und eine Bezahlinformation. Hierbei kann die Recheneinheit weiter derart geschützt werden, dass eine unbefugte Autorisierung unmöglich wird. Hierzu sind dem Fachmann bereits kryptographische oder hardwaretechnische Methoden bekannt.

Die Recheneinheit kann alleine über eine Autorisierung einer Autorisierungsanfrage entscheiden oder aber auch in einem Zusammenwirken mit dem Lesegerät und weiteren Komponenten. Somit ist es also möglich, dass die Recheneinheit eine Anfrage erhält und selbsttätig aufgrund eines abgespeicherten Algorithmus oder einer bestimmten Information entscheidet, ob die Anfrage positiv oder negativ beantwortet wird. Ferner kann die Recheneinheit auch nur eine Information derart bereitstellen, dass eine weitere, eventuelle externe Komponente, über die Autorisierung entscheiden kann. Beispielsweise ist es möglich, der Recheneinheit ein oberes Limit eines Bezahlvorgangs bereitzustellen oder aber auch bestimmte Zeiten, zu denen ein Zugang gewährt werden kann. Somit kann die Recheneinheit die Anfrage überprüfen und entscheiden, ob der gewünschte Betrag gezahlt werden kann, bzw. ob tatsächlich auch die abgespeicherten Zugangszeiten vorliegen.

Die Kommunikationseinheit ist eingerichtet zum Empfangen und zum Aussenden von Steuersignalen, wobei typischerweise Autorisierungsanfragen mittels Steuersignalen empfangen werden und eine Autorisierungsinformation wieder zurück an ein Lesegerät übermittelt wird. Somit dient die Kommunikationseinheit als Kommunikationsschnittstelle für die Recheneinheit und kann ferner weitere Aufgaben übernehmen. Beispielsweise kann die Kommunikationseinheit als eine Spule vorliegen, die auch mittels Induktion Strom erzeugen kann. Hierbei ist es besonders vorteilhaft, dass die Kommunikationseinheit leicht ausgestaltet werden kann, da diese lediglich punktuell betrieben werden muss. So ist es möglich, dass ein entsprechendes Lesegerät mittels der ausgesendeten Steuersignale einen Induktionsvorgang in der Autorisierungsvorrichtung startet, und die Recheneinheit sowohl mit den Steuersignalen bzw. entsprechenden Daten versorgt wird und eben auch mit Energie.

Damit die Autorisierungsvorrichtung an menschlicher Haut angebracht werden kann, ist eine Klebeschicht vorgesehen, die die Recheneinheit und die Kommunikationseinheit mittels der menschlichen Haut verbinden. Hierbei ist es möglich, weitere Komponenten vorzusehen, beispielsweise ein Modul oder ein Substrat, auf die die Recheneinheit und die Kommunikationseinheit aufgebracht werden. Auch kann die Klebeschicht eines Pflasters Verwendung finden, derart, dass die Recheneinheit und die Kommunikationseinheit in das Pflaster eingearbeitet sind. Hierbei ist die Klebeschicht derart auszugestalten, dass diese sowohl für den Träger angenehm ist als auch dauerhaft.

Da es sich bei der Autorisierungsvorrichtung um einen Einwegartikel handeln soll, ist diese so ausgestaltet, dass diese nach einem Anbringen an menschlicher Haut von dieser nicht mehr zerstörungsfrei ablösbar ist. Dies soll bewirken, dass bei einem Verlust der Autorisierungsvorrichtung kein weiterer Unbefugter die bereitgestellte Funktionalität nutzen kann und beispielsweise, dass ein Kunde bei einem Verlassen eines gesicherten Bereichs keine weiteren Bezahlvorgänge tätigen kann. Zwar soll die Autorisierungsvorrichtung derart ausgestaltet werden, dass sie ablösbar ist, dies soll jedoch nur absichtlich erfolgen und die Autorisierungsvorrichtung soll sich nicht durch leichten Krafteintrag ablösen. Hierbei sind Materialien bzw. Klebstoffe bekannt, die dies bewerkstelligen und welche je nach Anwendungsszenario ausgelegt werden können.

Ein zerstörungsfreies Ablösen soll deshalb verhindert werden, da die Autorisierungsvorrichtung nach einem Ablösen keinerlei Funktionalität mehr bereitstellen soll. Dies kann beispielsweise dadurch bewerkstelligt werden, dass die Autorisierungsvorrichtung eine Sollbruchstelle aufweist, die elektronische bzw. elektrische Komponenten bei einem Ablösen zerstört. Da es sich generell um ein Einmalprodukt handelt, sind die vorgeschlagenen Einheiten nicht besonders robust auszugestalten, und sie können starr ausgestaltet werden, wobei weitere Komponenten wiederum flexibel ausgestaltet werden können. Somit kann beispielsweise die Kommunikationseinheit als ein starrer Draht vorliegen, der bei einem Abziehen der Autorisierungsvorrichtung zerbricht. So wird die Autorisierungsvorrichtung bei einem Abziehen von menschlicher Haut aufgrund flexibler Materialien verformt, und ab einem bestimmten Verformungsgrad bricht die Kommunikationseinheit. Somit kann die Autorisierungsvorrichtung keinerlei Steuersignale autorisieren, da diese von einem Empfang und einem Aussenden ausgeschlossen ist. Generell eignen sich alle vorgeschlagenen Einheiten zur Zerstörung mittels Ablösens der Autorisierungsvorrichtüng. Je nach Anwendungsszenario kann auch die Recheneinheit derart ausgestaltet werden, dass sie bei einem Ablösen bricht bzw. sich derart verformt, dass sie keine Funktion mehr bereitstellen kann. Hierzu sind auch passive Komponenten geeignet, wie beispielsweise ein Datenbus. Ein Datenbus bzw. eine Kommunikationsleitung oder eine Stromleitung können derart ausgestaltet werden, dass einzelne Komponenten, beispielsweise die Recheneinheit und eine Speichereinheit, verbunden werden. Wird nun die Autorisierungsvorrichtung von menschlicher Haut abgezogen, so kann eben dieser Bus bzw. diese Leitung brechen und die Autorisierungsvorrichtung kann wiederum keinerlei Funktion bereitstellen.

Hierbei erkennt der Fachmann, dass er je nach Sicherheitsanforderung auch mehrere Einheiten bzw. Leitungen derart ausgestalten kann, dass sie sich bei einem Entfernen der Autorisierungsvorrichtung derart verhalten, dass sie keinerlei Funktion mehr bieten. So ist es beispielsweise oft möglich, dass sowohl eine Leitung als auch die Kommunikationseinheit bricht bzw. reißt. Hierdurch wird zumindest verhindert, dass eine aufgefundene Autorisierungsvorrichtung missbräuchlich weiterverwendet werden kann. Generell kann es möglich sein, dass mittels technischem Aufwand die Autorisierungsvorrichtung wieder derart repariert werden kann, dass beispielsweise die entsprechenden Leitungen wiederhergestellt werden, was jedoch einen erheblichen technischen Aufwand darstellt. Ein solcher Umgehungsversuch kann auch dadurch verhindert werden, dass die Autorisierungsvorrichtung individualisiert wird und von dem Lesegerät gesperrt wird. Beispielsweise kann auch in der Recheneinheit hinterlegt werden, dass diese sich selbst deaktiviert, falls über einen längeren Zeitraum keine Steuersignale empfangen werden. So ist es auch möglich, dass ein Lesegerät lediglich denjenigen Autorisierungsvorrichtung Zugang gewährt bzw. eine Zahlung gewährt, die am gleichen Tag aktiviert wurden. Somit können verbrauchte Autorisierungsvorrichtungen entsorgt werden, und falls diese aufgefunden werden, sind diese bereits als deaktiviert registriert, und ein weiterer Bezahlvorgang bzw. ein weiterer Zugang wird ausgeschlossen. Somit sind also bereits verwendete und zerstörte Autorisierungsvorrichtungen für einen möglichen Angreifer wertlos.

Um den Tragekomfort zu erhöhen, kann die Autorisierungsvorrichtung im Generellen flexibel ausgestaltet werden, was also dazu führt, dass ein Trägersubstrat dehnbar ist. Werden nunmehr einzelne Komponenten starr bzw. steif ausgeformt, so kann sich das Trägersubstrat dehnen bzw. biegen, und ab einem bestimmten Dehnungsgrad bzw. einem Biegungsgrad brechen einzelne Komponenten. So kann eine Autorisierungsvorrichtung für einen besseren Tragekomfort gedehnt werden und hierbei bis zu einem gewissen Grad einer Bewegung eines menschlichen Körpers folgen, wobei jedoch bei einem Überdehnen, wie es bei einem Ablösen notwendig ist, mindestens eine elektrische oder elektronische Komponente reißt. Somit kann ein hoher Tragekomfort mit einer Sicherheitsfunktion kombiniert werden.

Die Eignung der Klebeschicht zur Anbringung an menschlicher Haut stellt lediglich eine bevorzugte Ausführungsform dar und ist derart zu verstehen, dass eine Klebeschicht vorgesehen wird, die beispielsweise auch zur Anhaftung an Textilien oder generell Gegenständen geeignet ist. Somit kann es sich bei der Klebeschicht einfach um ein lösliches Klebemittel handeln, welches je nach Anwendungsszenario auszuwählen ist.

Gemäß einem Aspekt der vorliegenden Erfindung erfolgt bei einem Ablösen der Autorisierungsvorrichtung ein Brechen mindestens einer elektrischen oder elektronischen Einheit. Dies hat den Vorteil, dass ein Zerstören bzw. ein Brechen oder Reißen mindestens einer Einheit bzw. Datenleitung erfolgt, derart, dass keinerlei weitere Funktion bereitgestellt wird. Ferner ist es möglich, auch die Beschädigung einzelner Komponenten zu erkennen und hierbei beispielsweise die Recheneinheit zu sperren. Bei einer elektrischen Komponente kann es sich um eine Stromleitung oder eine Datenleitung handeln, wobei eine Recheneinheit typischerweise elektronisch ausgestaltet ist.

Gemäß einem weiteren Aspekt der vorliegenden Erfindung ist die Autorisierungsvorrichtung derart ausgestaltet, dass bei einem Ablösen der Autorisierungsvorrichtung ein Brechen mindestens einer elektrischen Leitung erfolgt. Hierbei kann es sich beispielsweise um diejenige Leitung handeln, die eine Energiequelle bzw. einen Energiewandler mit der Recheneinheit verbindet. Eine Leitung kann entweder brechen oder reißen, was generell als eine Zerstörung verstanden werden kann. Hierbei kommt es lediglich darauf an, dass die Leitung nicht mehr zu ihrem bestimmungsgemäßen Gebrauch geeignet ist und somit die Funktionalität der Autorisierungsvorrichtung zumindest eingeschränkt ist.

Gemäß einem weiteren Aspekt der vorliegenden Erfindung liegt die elektrische Leitung als eine Datenleitung oder eine Stromversorgungsleitung vor. Dies hat den Vorteil, dass entweder die Recheneinheit oder die Speichereinheit keine Funktionalität mehr bereitstellen kann, da eine Datenleitung unterbrochen ist, oder aber einzelne Komponenten werden nicht mehr mit Strom versorgt und sind daher nicht mehr ansprechbar. Je nach Anzahl der zerstörten Leitungen ist es hierbei auch möglich, eine Sicherheitsstufe einzustellen. Beispielsweise können diverse elektrische Leitungen derart platziert werden, dass sie bei einem Biegen bzw. Dehnen sofort reißen. Somit können die elektrischen Leitungen in der Autorisierungsvorrichtung derart gelegt werden, dass ein zerstörungsfreies Ablösen der Autorisierungsvorrichtung nicht möglich ist. So können die Leitungen an einem Rand der Autorisierungsvorrichtung verlegt werden, derart, dass ein Ablösen ohne ein Zerren oder Biegen dieses Randes nicht möglich ist. Somit kann auch sichergestellt werden, dass bei einem Ablösen tatsächlich auch mindestens eine Leitung zerstört wird.

Gemäß einem weiteren Aspekt der vorliegenden Erfindung ist die Autorisierungsvorrichtung als ein Pflaster ausgestaltet. Dies hat den Vorteil, dass ein textiles Pflaster oder ein Heftpflaster Anwendung finden können und dem Träger somit ein bekanntes Konzept bereitgestellt wird, welches er aus seinem alltäglichen Leben bereits kennt. Entsprechende Pflaster sind bereits bezüglich ihrer Pflegeeigenschaften hinreichend bekannt, so dass eben auch ein geeignetes Pflasterformat bzw. eine Beschaffenheit ausgewählt und erfindungsgemäß verwendet werden kann.

Gemäß einem weiteren Aspekt der vorliegenden Erfindung sind Partikel vorgesehen, welche bei einem Kontakt der Autorisierungsvorrichtung mit menschlicher Haut an dieser nachweisbar sind. Dies hat den Vorteil, dass beispielsweise Farbpigmente oder UV-Partikel an mindestens einer Komponente der Autorisierungsvorrichtung derart angebracht werden können, dass es bei einem Anbringen der Autorisierungsvorrichtung an menschlicher Haut zu einem Abfärben bzw. zu einem Hinterlassen der Partikel kommt. Somit kann beispielsweise mittels technischer Hilfsmittel festgestellt werden, ob eine Autorisierungsvorrichtung bereits an einem Träger angebracht war. Dies stellt ein zusätzliches Sicherheitsmerkmal zu der Sollbruchstelle bereit.

Gemäß einem weiteren Aspekt der vorliegenden Erfindung ist die Autorisierungsvorrichtung datentechnisch individualisiert. Dies hat den Vorteil, dass beispielsweise mittels der Recheneinheit eine Identität eines Benutzers bereitgestellt werden kann. Hierbei reicht es bereits, eine eindeutige Seriennummer zu hinterlegen, welche beispielsweise in einem Kassensystem oder einem Zugangssystem hinterlegt ist. Dies ermöglicht es auch, die Aütorisierungsvorrichtung nach einem Gebrauch zu sperren.

Gemäß einem weiteren Aspekt der vorliegenden Erfindung ist die Klebeschicht mittels eines Heftpflasters bereitgestellt. Dies hat den Vorteil, dass die entsprechenden Komponenten in ein Heftpflaster eingebracht werden können und somit ein Trägersubstrat bereitgestellt wird, welches es ermöglicht, dass die einzelnen Einheiten auf eine Oberfläche aufgeklebt werden. Hierbei eignet sich beispielsweise ein textiles Heftpflaster, welches flexibel ausgestaltet ist.

Gemäß einem weiteren Aspekt der vorliegenden Erfindung liegt die Recheneinheit als ein elektrischer Schaltkreis, ein Chip, ein Mikrocontroller, ein Prozessor oder ein Rechenmodul vor. Dies hat den Vorteil, dass die Recheneinheit gemäß bekannter Hardwarekomponenten ausgestaltet werden kann, und insbesondere, dass eine besonders leichte und kostengünstige Bauart der Recheneinheit vorgeschlagen wird.

Gemäß einem weiteren Aspekt der vorliegenden Erfindung liegt die Kommunikationseinheit als eine Antenne, eine geätzte Antenne, als ein Draht, eine Spule, eine Induktionsspule, eine Kommunikationsschnittstelle, eine kontaktlose Kommunikationsschnittstelle oder ein Transceiver vor. Dies hat den Vorteil, dass besonders leichte Komponenten Einsatz finden, welche auch besonders leicht zerstörbar sind. Beispielsweise kann ein Draht derart ausgestaltet werden, dass er eine besonders große Fläche der Autorisierungsvorrichtung umspannt, was zu einer großen Leistungsaufnahme und - abgabe führt und zudem sicherstellt, dass ein solcher Draht bei einem Ablösen der Autorisierungsvorrichtung auch tatsächlich bricht. Ferner können starre Antennen vorgesehen werden, welche ebenfalls gerade bei einem flexiblen Trägersubstrat brechen.

Gemäß einem weiteren Aspekt der vorliegenden Erfindung ist die Kommunikationseinheit aus Aluminium, Kupfer, Silber und/ oder mittels einer leitfähigen Paste bereitgestellt. Dies hat den Vorteil, dass die Kommunikationseinheit besonders gute Empfangs- bzw. Sendeeigenschaften aufweist und bereits entsprechende Verfahren vorliegen, wie solche Kommunikationseinheiten bereitgestellt werden können. Hierbei wird auch sichergestellt, dass eine Ausgestaltung der Kommunikationseinheit vorliegt, die es ermöglicht, dass die Kommunikationseinheit bis zu einem gewissen Grad flexibel ist, dann aber bei einer Überbeanspruchung bricht.

Die Aufgabe wird auch gelöst durch ein Verfahren zur Herstellung einer Autorisierungsvorrichtung zur kontaktlosen Bezahlung und zur Zugangskontrolle, aufweisend ein Bereitstellen einer Recheneinheit, eingerichtet zur Autorisierung von empfangenen Steuersignalen, ein Bereitstellen einer Kommunikationseinheit, eingerichtet zum Empfangen und zum Aussenden von Steuersignalen, sowie ein Bereitstellen einer Klebeschicht zur Anbringung der Recheneinheit und der Kommunikationseinheit an menschlicher Haut, wobei die Autorisierungsvorrichtung derart ausgestaltet wird, dass sie nach einem Anbringen von menschlicher Haut nicht zerstörungsfrei ablösbar ist.

Die Aufgabe wird auch gelöst durch eine Autorisierungsanordnung mit einer Autorisierungsvorrichtung nach einem der vorgeschlagenen Ausgestaltungen und einer stationären Anfrageeinrichtung zum Senden und Empfangen von Autorisierungsanfragen an die Autorisierungsvorrichtung. Bei der Anfrageeinrichtung handelt es sich typischerweise um ein stationäres Lesegerät, wobei dies jedoch auch mobil ausgestaltet werden kann. Somit wirken die Autorisierungsvorrichtung und die Anfrageeinrichtung derart zusammen, dass ein kontaktloses Bezahlsystem bzw. ein Zugangssystem bereitgestellt wird.

Gemäß einem Aspekt der vorliegenden Erfindung sind die Anfrageeinrichtung und die Autorisierungsvorrichtung eingerichtet, Steuersignale in einem Zusammenwirken zu autorisieren. Dies hat den Vorteil, dass nicht die Autorisierungsvorrichtung alleine entsprechende Autorisierungsanfragen bearbeiten muss, sondern vielmehr kann die Autorisierungsvorrichtung zumindest eine Information bereitstellen, welche des der Anfrageeinrichtung ermöglicht, über eine Autorisierung zu entscheiden. Beispielsweise hat die Anfrageeinrichtung Zugang zu einem Bezahllimit und zu einer Zugangsinformation. Stellt nunmehr die Autorisierungsvorrichtung eine bestimmte Identität bereit, so kann die Anfrageeinrichtung feststellen, ob diese spezielle Identität den angeforderten Betrag bezahlen darf und ob dieser Identität ein Zugang gewährt werden soll. Daraufhin kann die Anfrageeinrichtung eine Autorisierung freigeben oder eben auch verweigern.

Die Aufgabe wird auch gelöst durch ein Computerprogrammprodukt mit Steuerbefehlen, welche das vorgeschlagene Verfahren ausführen bzw. die vorgeschlagene Autorisierungsanordnung betreiben.

Hierbei ist es besonders vorteilhaft, dass die vorgeschlagene Autorisierungsvorrichtung strukturelle Merkmale aufweist, welche mittels des vorgeschlagenen Verfahrens herbeigeführt werden. Auch werden die strukturellen Merkmale der Autorisierungsvorrichtung in der vorgeschlagenen Autorisierungsanordnung berücksichtigt. Das Computerprogrammprodukt weist Steuerbefehle auf, welche das vorgeschlagene Verfahren implementieren bzw. die Autorisierungsvorrichtung und/ oder die Autorisierungsanordnung betreiben.

Weitere vorteilhafte Ausgestaltungen werden anhand der beigefügten Figuren näher erläutert. Es zeigen:
- Fig. 1:: eine Autorisierungsvorrichtung gemäß einem Aspekt der vorliegenden Erfindung;
- Fig. 2:: eine weitere Autorisierungsvorrichtung gemäß einem weiteren Aspekt der vorliegenden Erfindung; und
- Fig. 3:: ein Verfahren zum Bereitstellen einer Autorisierungsvorrichtung gemäß einem Aspekt der vorliegenden Erfindung.

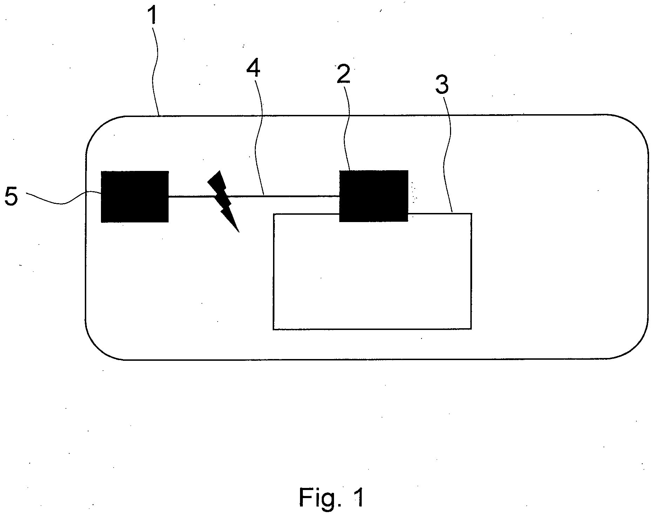

Fig.1 zeigt eine Autorisierungsvorrichtung 1, welche eine Recheneinheit 2 sowie eine Kommunikationseinrichtung 3 aufweist. Wie vorliegend ersichtlich ist, ist die Recheneinheit 2 mittels einer Datenleitung 4 mit einer Speichereinrichtung 5 verbunden. Hierbei ist die Datenleitung derart angeordnet, dass, falls die Autorisierungsvorrichtung 1 abgelöst wird, die Datenleitung 4 reißt und somit ein Verbindungsabbruch zwischen der Recheneinheit 2 und der Speichereinheit 5 entsteht. Somit ist also die Autorisierungsvorrichtung 1 nicht mehr ansprechbar, da die Recheneinheit im vorliegenden Beispiel nicht geeignet ist, ohne einen Speicherzugriff Steuersignale zu verarbeiten.

Generell ist es vorteilhaft, eine Leitung derart auszugestalten, dass sie bei einem Ablösen der Autorisierungsvorrichtung 1 tatsächlich auch reißt bzw. bricht. Hierbei ist es möglich, eine besonders lange Leitung vorzusehen, welche sich nach Möglichkeit über die gesamte Oberfläche der Autorisierungsvorrichtung erstreckt und an mindestens einer Stelle besonders dünn ausgestaltet werden kann. Somit können also entsprechende Sollbruchstellen in einer Leitung vorgesehen werden.

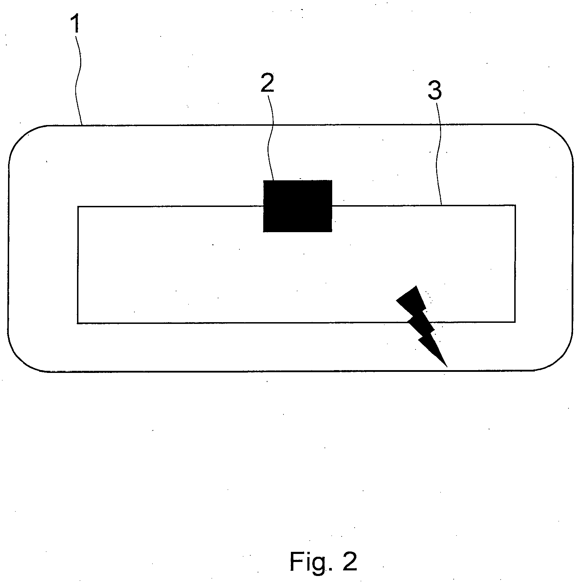

Fig. 2 zeigt eine Autorisierungsvorrichtung in Form eines Pflasters 1, aufweisend eine Steuereinheit, welche vorliegend als Chip 2 eingezeichnet ist, sowie eine Kommunikationseinheit, die als eine Antenne 3 vorliegt. Im Gegensatz zu dem Beispiel gemäß Fig. 1 ist es vorliegend eine Komponente der Autorisierungsvorrichtung, welche eine Sollbruchstelle aufweist, nämlich die Antenne 3. Somit ist es also nicht lediglich möglich, Leitungen mit Sollbruchstellen zu versehen, sondern vielmehr auch funktionale Komponenten, wie eben die Antenne 3. Während vorliegend die Antenne 3 klein bezüglich der Fläche des Pflasters 1 ausgestaltet ist, so ist es auch möglich, den Umfang der Antenne derart zu erhöhen, dass sie bei einem Ablösen der Autorisierungsvorrichtung tatsächlich auch bricht. Somit kann die Größe bzw. Lage einzelner Komponenten bzw. Leitungen an ein Sicherheitsniveau der Autorisierungsvorrichtung 1 angepasst werden.

Es soll zum Beispiel für Großveranstaltungen oder zum Beispiel in Schwimmbädern dem Betreiber die Möglichkeit gegeben werden, eine kostengünstige und einfache Lösung für die Gewährung des Zutritts zum Event oder einem bestimmten Bereich zu ermöglichen. Weiterhin ist auch das Bezahlen von konsumierten Waren mit dem genannten Kontaktlospflaster möglich.

Die Idee ist auf einem Substrat des ähnlich einem Pflaster aufgebaut ist, eine Antenne und einen Chip zu integrieren. Auf der Vorderseite kann dann weiterhin ein Aufdruck aufgebracht werden. Die Antenne kann dabei aus verschiedenen Materialien bestehen. In einer Variante kann zum Beispiel ein sehr dünner Draht verwendete werden oder eine geätzte Antenne. Hier ist nach dem Gebrauch des Pflasters die Funktionalität der Kontaktlos-Schnittstelle gegeben. Wird zum Beispiel die Antenne aus einer gedruckten leitfähigen Paste oder einer dünnen Aluminiumschicht gefertigt, dann sollte beim Ablösen des Pflasters die kontaktlose Funktionalität unterbrochen werden. Damit ist eine Wiederverwendung nicht mehr möglich. Der verwendete Chip sollte idealerweise sehr dünn und flexibel sein.

Der Kleber sollte so gewählt werden, dass er hautverträglich ist und zwar dauerhaft auf der Haut oder anderen Materialien haftet aber auch wieder leicht zu lösen ist. Man könnte auch zum Beispiel UV-Partikel in den Kleber mischen und bei Abnahme des Pflasters bleiben UV-Spuren auf der Haut oder dem Träger-Device zurück, welche durch eine UV-Lampe detektierbare wären. Das würde ein gegenseitiges Austauschen des Pflasters erschweren.

Das Pflaster könnte auch mit einem geeigneten Verfahren personalisiert werden.

In einer weiteren Ausbaustufe ist auch die Integration einer Batterie (evtl. wiederaufladbar) und oder eines weiteren kontaktlos-Interfaces denkbar, z.B. BLE, WLAN, etc.

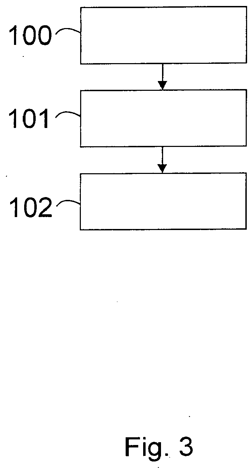

Fig. 3 zeigt ein schematisches Ablaufdiagramm eines Verfahrens zur Herstellung einer Autorisierungsvorrichtung 1 zur kontaktlosen Bezahlung und zur Zugangskontrolle, aufweisend ein Bereitstellen 100 einer Recheneinheit 2, eingerichtet zur Autorisierung von empfangenen Steuersignalen, ein Bereitstellen 101 einer Kommunikationseinheit 3, eingerichtet zum Empfangen und zum Aussenden von Steuersignalen, ein Bereitstellen 102 einer Klebeschicht zur Anbringung der Recheneinheit 2 und der Kommunikationseinheit 3 an menschlicher Haut, wobei die Autorisierungsvorrichtung 1 derart ausgestaltet wird, dass sie nach einem Anbringen von menschlicher Haut nicht zerstörungsfrei ablösbar ist.

Die Kommunikationseinheit, also die Antenne, kann als geätztes Kupfer oder Aluminium vorliegen, und ein kleines Stück der Antenne kann mit gedruckter Silberpaste aufgebracht werden. Wenn die Autorisierungsvorrichtung dann von der Haut entfernt wird, bleibt die Silberpaste auf der Haut zurück und die Antenne funktioniert nicht mehr. Auch kann auf der geätzten Antenne stärker haftender Kleber aufgebracht werden und dieser bleibt beim Abziehen auf der Haut stärker haftend, und die Antenne wird dabei zerstört. Somit kann also mittels einer Variation der Klebeeigenschaften der Klebeschicht sichergestellt werden, dass bei einem Ablösen der Autorisierungsvorrichtung eine Spannung bzw. Dehnung oder Biegung innerhalb der Autorisierungsvorrichtung entsteht und entsprechende Komponenten zerstört werden.

Ferner könnte man Partikel einbringen, welche bei Kontakt mit Schweiß die Farbe ändern und beim Abziehen des Pflasters diese auf der Vorderseite sichtbar werden. Ferner kann ein Stoff verwendet werden, der mit Luft reagiert und dann nach einer bestimmten Zeit die Farbe ändert.

Der Fachmann erkennt, dass die beschriebenen Verfahrensschritte iterativ und/ oder in anderer Reihenfolge ausgeführt werden können.

## Patentansprüche

1. Autorisierungsvorrichtung (1) zur kontaktlosen Bezahlung und zur Zugangskontrolle, aufweisend:
- eine Recheneinheit (2) eingerichtet zur Autorisierung von empfangenen Steuersignalen;
- eine Kommunikationseinheit (3) eingerichtet zum Empfang und zum Aussenden von Steuersignalen;
- eine Klebeschicht zur Anbringung der Recheneinheit (2) und der Kommunikationseinheit (3) an menschlicher Haut, **dadurch gekennzeichnet, dass** die Autorisierungsvorrichtung (1) derart ausgestaltet ist, dass sie nach einem Anbringen von menschlicher Haut nicht zerstörungsfrei ablösbar ist.

2. Autorisierungsvorrichtung (1) nach Anspruch 1, **dadurch gekennzeichnet, dass** diese derart ausgestaltet ist, dass bei einem Ablösen der Autorisierungsvorrichtung (1) ein Brechen mindestens einer elektrischen oder elektronischen Einheit erfolgt.

3. Autorisierungsvorrichtung (1) nach Anspruch 1 oder 2, **dadurch gekennzeichnet, dass** diese derart ausgestaltet ist, dass bei einem Ablösen der Autorisierungsvorrichtung (1) ein Brechen mindestens einer elektrischen Leitung (4) erfolgt.

4. Autorisierungsvorrichtung (1) nach Anspruch 3, **dadurch gekennzeichnet, dass** die elektrische Leitung als eine Datenleitung (4) oder eine Stromversorgungsleitung vorliegt.

5. Autorisierungsvorrichtung (1) nach einem der vorhergehenden Ansprüche, **dadurch gekennzeichnet, dass** diese als ein Pflaster ausgestaltet ist.

6. Autorisierungsvorrichtung (1) nach einem der vorhergehenden Ansprüche, **dadurch gekennzeichnet, dass** Partikel vorgesehen sind, welche bei einem Kontakt der Autorisierungsvorrichtung (1) mit menschlicher Haut an dieser nachweisbar sind.

7. Autorisierungsvorrichtung (1) nach einem der vorhergehenden Ansprüche, **dadurch gekennzeichnet, dass** diese datentechnisch individualisiert ist.

8. Autorisierungsvorrichtung (1) nach einem der vorhergehenden Ansprüche, **dadurch gekennzeichnet, dass** die Klebeschicht mittels eines Heftpflasters bereitgestellt ist.

9. Autorisierungsvorrichtung (1) nach einem der vorhergehenden Ansprüche, **dadurch gekennzeichnet, dass** die Recheneinheit (2) als ein elektrischer Schaltkreis, ein Chip, ein Mikrocontroller, ein Prozessor oder ein Rechenmodul vorliegt.

10. Autorisierungsvorrichtung (1) nach einem der vorhergehenden Ansprüche, **dadurch gekennzeichnet, dass** die Kommunikationseinheit (3) als eine Antenne, eine geätzte Antenne, als ein Draht, eine Spule, eine Induktionsspule, eine Kommunikationsschnittstelle, eine kontaktlose Kommunikationsschnittstelle oder ein Transceiver vorliegt.

11. Autorisierungsvorrichtung (1) nach einem der vorhergehenden Ansprüche, **dadurch gekennzeichnet, dass** die Kommunikationseinheit (3) aus Aluminium, Kupfer, Silber und/ oder mittels einer leitfähigen Paste bereitgestellt ist.

12. Verfahren zur Herstellung einer Autorisierungsvorrichtung (1) zur kontaktlosen Bezahlung und zur Zugangskontrolle, aufweisend:
- ein Bereitstellen (100) einer Recheneinheit (2) eingerichtet zur Autorisierung von empfangenen Steuersignalen;
- ein Bereitstellen (101) einer Kommunikationseinheit (3) eingerichtet zum Empfang und zum Aussenden von Steuersignalen;
- ein Bereitstellen (102) einer Klebeschicht zur Anbringung der Recheneinheit (2) und der Kommunikationseinheit (3) an menschlicher Haut, **dadurch gekennzeichnet, dass** die Autorisierungsvorrichtung (1) derart ausgestaltet wird, dass sie nach einem Anbringen von menschlicher Haut nicht zerstörungsfrei ablösbar ist.

13. Autorisierungsanordnung mit einer Autorisierungsvorrichtung (1) nach einem der Ansprüche 1 bis 11 und einer stationären Anfrageeinrichtung zum Senden und Empfangen von Autorisierungsanfragen an die Autorisierungsvorrichtung (1).

14. Autorisierungsanordnung nach einem der Anspruch 13, **dadurch gekennzeichnet, dass** die Anfrageeinrichtung und die Autorisierungsvorrichtung (1) eingerichtet sind, Steuersignale in einem Zusammenwirken zu autorisieren.

15. Computerprogrammprodukt mit Steuerbefehlen, welche das Verfahren gemäß Anspruch 12 implementieren.
